# EUROPEAN PATENT APPLICATION

(11) **EP 4 667 402 A1**
(43) Date of publication of application: **24.12.2025**
(21) Application number: 23922252.4
(22) Date of filing: 20.07.2023
(51) Int. Cl.: B65H 35/02, H01M 4/04

(54) **SLITTING APPARATUS**

(30) Priority: 13.02.2023 CN 202320201029 U
(71) Applicant: Wuxi Lead Intelligent Equipment Co., Ltd., Wuxi, Jiangsu 214028 (CN)
(72) Inventor: DING, Hua, Wuxi, Jiangsu 214028 (CN); TU, Xinping, Wuxi, Jiangsu 214028 (CN)
(74) Representative: Rau, Schneck & Hübner Patentanwälte Rechtsanwälte PartGmbB
(86) International application number: PCT/CN2023/108435
(87) International publication number: WO 2024/169129

(57) **Abstract**

Disclosed is a slitting apparatus, comprising an unwinding device, a first slitting device, a first conveying device, a second slitting device and a plurality of winding devices. The unwinding device is configured for outputting a pole piece material strip; the first slitting device is configured for receiving the pole piece material strip output by the unwinding device and slitting a foil area of the pole piece material strip to form a plurality of sub-material strips; the first conveying device is configured for receiving the plurality of sub-material strips and outputting them after arranging them spaced apart from each other and laid flat; the second slitting device is configured for receiving the plurality of sub-material strips which are arranged spaced apart from each other and laid flat, and slitting coating areas of the sub-material strips to form a plurality of pole pieces; and the plurality of winding devices are connected to the second slitting device, and are configured for winding the plurality of pole pieces. The slitting apparatus of the present disclosure disclose needs fewer tools, lower equipment cost, a smaller equipment, and a smaller footprint.

## Description

### CROSS-REFERENCE TO RELATED APPLICATIONS

The present disclosure claims priority to a Chinese patent application No. 202320201029.0 filed with the CNIPA on February 13, 2023 and entitled "SLITTING APPARATUS", which is hereby incorporated by reference in its entirety.

### TECHNICAL FIELD

The present disclosure relates to the technical field of a lithium battery, and particularly to a slitting apparatus.

### BACKGROUND

In the related arts, when producing pole pieces of lithium batteries, a slitting apparatus is mainly used to slit the pole piece material strip into narrow pole pieces for meeting specifications for a cell. During slitting, it is necessary to slit a foil area and a coating area of the pole piece material strip. Since slitting tools have different parameters for slitting different material areas, two slitting apparatuses with different tool parameters are usually used to slit the foil area and the coating area of the pole piece material strip respectively, which results in complicated material-loading/unloading procedures and relatively large number of apparatuses.

Regarding the above defects, now there are some slitting apparatuses equipped with tools of different parameters to sequentially slit the foil area and the coating area of the pole piece material strip. However, the aforementioned slitting apparatus requires at least three sets of tools, one of which cuts the foil area of the pole piece material strip to divide the pole piece material strip into two parts. The two parts are then slitted by the other two groups of tools on the coating area respectively, which results in a greater tools, higher equipment costs, a larger equipment and a larger footprint.

### SUMMARY

Embodiments of the present disclosure disclose a slitting apparatus with fewer tools, lower equipment cost, a smaller equipment, and a smaller footprint.

The embodiments of the present disclosure disclose a slitting apparatus, comprising an unwinding device, a first slitting device, a first conveying device, a second slitting device and a plurality of winding devices;
the unwinding device is configured for outputting a pole piece material strip;
the first slitting device is configured for receiving the pole piece material strip output by the unwinding device and slitting a foil area of the pole piece material strip to form a plurality of sub-material strips;
the first conveying device is configured for receiving the plurality of sub-material strips and outputting them after arranging them spaced apart from each other and laid flat;
the second slitting device is configured for receiving the plurality of sub-material strips which are arranged spaced apart from each other and laid flat, and slitting coating areas of the sub-material strips to form a plurality of pole pieces; and the plurality of winding devices are configured for winding the plurality of pole pieces.

Optionally, the first conveying device comprises a plurality of first conveying mechanisms, a second conveying mechanism, and a plurality of first alignment mechanisms, and the plurality of first conveying mechanisms are located between the first slitting device and the second conveying mechanism, and are arranged spaced apart along a height direction of the slitting apparatus;
all of the plurality of first conveying mechanisms are configured for receiving non-adjacent portions of the plurality of sub-material strips formed by the first slitting device, and conveying the plurality of sub-material strips to the second conveying mechanism via separate paths;
the second conveying mechanism is located between the first conveying mechanisms and the second slitting device, and is configured for receiving the plurality of sub-material strips which are arranged spaced apart from each other and laid flat and conveying them to the second slitting device;
the plurality of first alignment mechanisms are respectively provided on the plurality of first conveying mechanisms one by one, and are configured for adjusting positions of the plurality of sub-material strips on the first conveying mechanisms so that when the plurality of sub-material strips are conveyed to the second conveying mechanism, the plurality of sub-material strips are equally spaced along a width direction of the sub-material strips.

Optionally, the slitting apparatus further comprises a second conveying device, which is located between the unwinding device and the first slitting device and is configured for receiving the pole piece material strip output by the unwinding device and conveying the pole piece material strip to the first slitting device.

Optionally, the second conveying device comprises a driving roller and a plurality of transmission rollers, the plurality of transmission rollers are provided between the unwinding device and the first slitting device, with two adjacent transmission rollers being spaced apart, wherein two groups of the two adjacent transmission rollers are provided with the driving roller therebetween, and the driving roller is configured for driving the pole piece material strip along the plurality of transmission rollers from the unwinding device to the first slitting device.

Optionally, the second conveying device further comprises a tension balancing roller, which is provided between two groups of the two adjacent transmission rollers and is configured for regulating tension of the pole piece material strip.

Optionally, the slitting apparatus further comprises a tension isolating mechanism, which is provided on the first conveying device and is configured for isolating tension of the sub-material strips located between the first slitting device and the second slitting device.

Optionally, the slitting apparatus further comprises a plurality of material-strip pressing mechanisms, one of which is provided between each winding device and the second slitting device, and each material-strip pressing mechanism is configured for applying pressure to each pole piece to tighten the pole piece.

Optionally, the slitting apparatus further comprises a second alignment mechanism, which is provided between the unwinding device and the first slitting device and is configured for adjusting, in a width direction of the pole piece material strip, a position of the pole piece material strip entering the first slitting device.

Optionally, the slitting apparatus further comprises a plurality of third conveying devices, each of which is provided between each winding device and the second slitting device, and the plurality of third conveying devices are configured for conveying the plurality of pole pieces from the second slitting device to the plurality of winding devices.

Optionally, the slitting apparatus further comprises a plurality of width measuring mechanisms, which are respectively provided on the plurality of third conveying devices one by one, and each width measuring mechanism is configured for measuring width of the pole piece conveyed by a corresponding third conveying device.

Optionally, the slitting apparatus further comprises a plurality of dust removing mechanisms, which are respectively provided on the plurality of third conveying devices one by one, and each dust removing mechanism is configured for removing dust from the pole piece conveyed by a corresponding third conveying device.

Optionally, each dust removing mechanism comprises one or more of a brush dust-removing mechanism, an ultrasonic dust-removing mechanism, and an air knife dust removing mechanism.

Optionally, the slitting apparatus further comprises a plurality of static-eliminating mechanisms, which are respectively provided on the plurality of third conveying devices one by one, and each static-eliminating mechanism is configured for eliminating static from the pole piece conveyed by a corresponding third conveying device.

Compared with the prior art, the embodiments of the present disclosure has at least the following advantages:
In embodiments of the present disclosure, the unwinding device outputs the pole piece material strip to the first slitting device, the first slitting device receives the pole piece material strip and slits the foil area to form the plurality of sub-material strips, and the first conveying device receives the plurality of sub-material strips and after arranging them spaced apart from each other and laid flat, outputs them to the second slitting device. In this way, the second slitting device can simultaneously slit the coating area of the plurality of sub-material strips to form the plurality of pole pieces, without the need to provide a plurality of second slitting devices to slit the coating area of the plurality of sub-material strips respectively. This results in fewer slitting tools, lower equipment cost, a smaller equipment, and a smaller footprint. Moreover, with the plurality of sub-material strips spaced and laid flat, it is possible to avoid interference or even entanglement between the sub-material strips. At the same time, the plurality of winding devices are used to wind the plurality of pole pieces, thereby packaging the pole pieces.

### BRIEF DESCRIPTION OF THE DRAWINGS

In order to more clearly illustrate embodiments of the present disclosure or technical solutions in the prior art, accompanying drawings that need to be used in description of the embodiments or the prior art will be briefly introduced as follows. Obviously, drawings in following description are only the embodiments of the present disclosure. For those skilled in the art, other drawings can also be obtained according to the disclosed drawings without creative efforts.
FIG. 1 is a structural schematic view of a slitting apparatus disclosed in an embodiment of the present disclosure;
FIG. 2 is a structural schematic view of a pole piece material strip disclosed in an embodiment of the present disclosure;
FIG. 3 is a structural schematic view of a sub-material strip disclosed in an embodiment of the present disclosure;
FIG. 4 is a structural schematic view of a slitting apparatus in the related art.

### Description of reference signs:

100, slitting apparatus;
1, unwinding device;
2, first slitting device;
3, first conveying device; 31, first conveying mechanism; 32, second conveying mechanism;
4, second slitting device; 5, winding device; 6, first alignment mechanism;
7, second conveying device; 71, driving roller; 72, transmission roller; 73, tension balancing roller;
8, tension isolating mechanism; 9, material-strip pressing mechanism; 10, second alignment mechanism; 11, third conveying device; 12, width measuring mechanism;
13, dust removing mechanism; 131, brush dust-removing mechanism; 132, ultrasonic dust-removing mechanism;
14, color mark sensor;
200, pole piece material strip; 200a, coating area; 200b, first foil area; 200c, second foil area; 201, sub-material strip; 202, pole piece.

### DETAILED DESCRIPTION

The technical solutions in the embodiments of the present disclosure will be clearly and completely described below in conjunction with the accompanying drawings in the embodiments of the present disclosure. Obviously, the described embodiments are only a part of the embodiments of the present disclosure, and not all of them. Based on the embodiments in the present disclosure, all other embodiments obtained by a person of ordinary skill in the art without making creative labor fall within the scope of protection of the present disclosure.

In the present disclosure, terms such as "up", "down", "left", "right", "front", "back", "top", "bottom", "inside", "outside", "middle", "vertical", "horizontal", "transverse", "longitudinal", etc., indicate the orientation or position relationships based on the orientation or position relationships shown in the drawings. These terms are primarily used to better describe the present disclosure and its embodiments, and are not intended to limit the devices, components, or parts indicated to have specific orientations or to be constructed and operated in specific orientations.

Furthermore, some of the aforementioned terms, in addition to indicating orientation or position relationships, may also represent other meanings. For example, the term "up" may sometimes be used to denote a certain relationship of attachment or connection. For ordinary technical personnel in this field, the specific meanings of these terms in the present disclosure can be understood according to the specific situation.

In addition, the terms "install", "provide", "provided with", "connect", "connected" should be understood in a broad sense. For example, it can be a fixed connection, a detachable connection, or an integrated structure; it can be a mechanical connection, or an electrical connection; it can be a direct connection, or an indirect connection through an intermediary, or an internal connection between two devices, components, or parts. For ordinary technical personnel in this field, the specific meanings of the above terms in the present disclosure can be understood according to the specific situation.

Furthermore, the terms "first", "second", etc., are mainly used to distinguish different devices, components, or parts (which may or may not be the same in type and structure), and are not intended to indicate or imply the relative importance and quantity of the devices, components, or parts indicated. Unless otherwise specified, "a plurality of" means two or more.

The present disclosure discloses a slitting apparatus with fewer tools, lower equipment cost, a smaller equipment, and a smaller footprint.

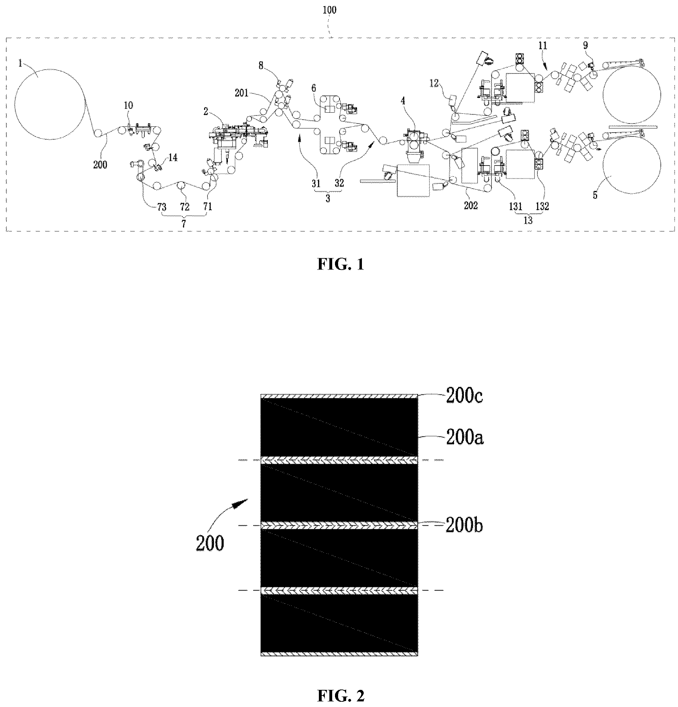

Please refer to FIG. 1 and FIG. 2, they show structural schematic views of the slitting apparatus 100 disclosed in the embodiments of the present disclosure. The slitting apparatus 100 comprises an unwinding device 1, a first slitting device 2, a first conveying device 3, a second slitting device 4, and a plurality of winding devices 5.

The unwinding device 1 is configured for outputting the pole piece material strip 200. The first slitting device 2 is configured for receiving the pole piece material strip 200 output by the unwinding device 1 and slitting the foil area of the pole piece material strip 200 to form a plurality of sub-material strips 201. The first conveying device 3 is configured for receiving the plurality of sub-material strips 201 and outputting them after arranging them spaced apart from each other and laid flat. The second slitting device 4 is configured for receiving the plurality of sub-material strips 201 that are arranged spaced apart from each other and laid flat and slitting the coating areas of the sub-material strips 201 to form a plurality of pole pieces 202. The plurality of winding devices 5 are configured for winding the plurality of pole pieces 202.

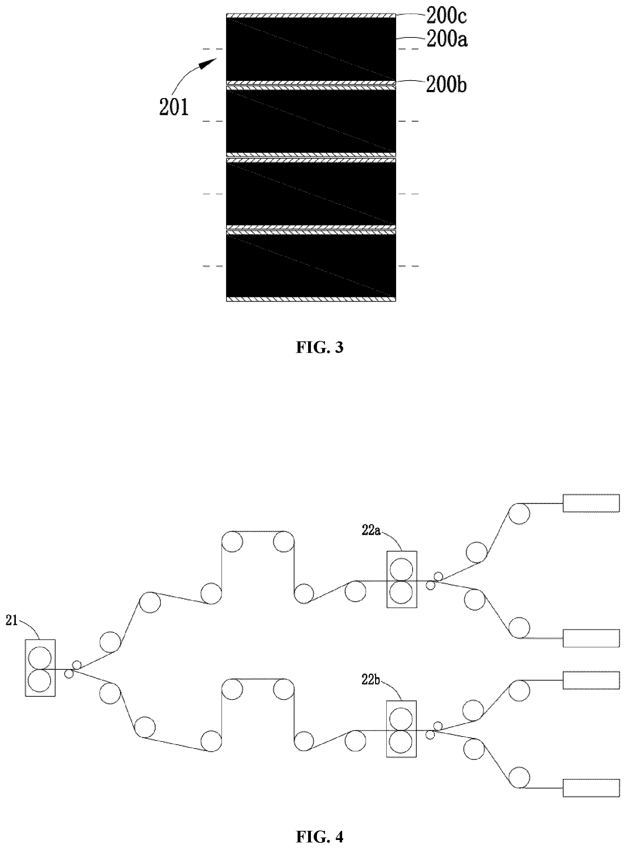

Wherein, as shown in FIG. 2, the first slitting device 2 slitting the foil area of the pole piece material strip 200 refers to slitting the first foil area 200b. As shown in FIG. 3, the plurality of sub-material strips 201 being arranged spaced apart from each other and laid flat means that the plurality of sub-material strips 201 are arranged spaced apart along the width direction of the sub-material strips 201 and are coplanar.

In this embodiment, the unwinding device 1 outputs the pole piece material strip 200 to the first slitting device 2, the first slitting device 2 receives the pole piece material strip 200 and slits the foil area to form the plurality of sub-material strips 201, and the first conveying device 3 receives the plurality of sub-material strips 201 and after arranging them spaced apart from each other and laid flat, outputs them to the second slitting device 4. In this way, the second slitting device 4 can simultaneously slit the coating areas 200a of the plurality of sub-material strips 201 to form the plurality of pole pieces 202, without the need to provide a plurality of second slitting devices 4 to slit the coating areas 200a of the plurality of sub-material strips 201 respectively. This results in fewer slitting tools, lower equipment cost, a smaller equipment, and a smaller footprint. Moreover, with the plurality of sub-material strips 201 spaced and laid flat, it is possible to avoid interference or even entanglement between the sub-material strips. At the same time, the plurality of winding devices 5 are used to wind the plurality of pole pieces 202, thereby packaging the pole pieces 202.

In the related art, as shown in FIG. 4, some existing slitting apparatuses require at least three sets of slitting tools. One set of slitting tools 21 slits the foil area of the pole piece material strip and divides it into two parts. These two parts are then slitted by the other two groups of slitting tools 22a and 22b on the coating area respectively. These two parts are usually conveyed in upper and lower two paths, and then the other two groups of slitting tools 22a and 22b are located in the upper and lower two paths respectively. This leads to the existing slitting apparatuses occupying a larger space in the height direction, requiring elevated operations, increasing the risk of operation, and causes that the apparatus has a relatively complex structure with more risk points, leading to a higher failure rate, lower utilization rate, and lower production efficiency.

In contrast, in this embodiment, one second slitting device 4 may slit the coating areas 200a of a plurality of sub-material strips 201 simultaneously to form a plurality of pole pieces 202, which may reduce the space occupied by the slitting apparatus 100 in the height direction, thereby eliminating the need for elevated operations and reducing the risk of operational accidents. Moreover, in this embodiment, the slitting apparatus 100 has a relatively simple structure with fewer risk points, leading to a lower failure rate, higher utilization rate, and higher production efficiency.

In some embodiments, as shown in FIG. 1, the first conveying device 3 comprises a plurality of first conveying mechanisms 31, a second conveying mechanism 32, and a plurality of first alignment mechanisms 6.

The plurality of first conveying mechanisms 31 are located between the first slitting device 2 and the second conveying mechanism 32, arranged spaced apart along the height direction of the slitting apparatus 100. Each first conveying mechanism 31 is used to receive non-adjacent portions of the plurality of sub-material strips 201 formed by the first slitting device 2 and conveys the plurality of sub-material strips to the second conveying mechanism 32 via separate paths.

The second conveying mechanism 32 is located between the first conveying mechanisms 31 and the second slitting device 4, and is configured for receiving the plurality of sub-material strips 201 which are arranged spaced apart from each other and laid flat, and conveying them to the second slitting device 4.

The plurality of first alignment mechanisms 6 are respectively provided on the plurality of first conveying mechanisms 31 one by one, and are configured for adjusting positions of the plurality of sub-material strips 201 on the first conveying mechanisms 31 so that when the plurality of sub-material strips 201 are conveyed to the second conveying mechanism 32, the sub-material strips are equally spaced along the width direction of the sub-material strips 201.

On the one hand, by providing the plurality of first conveying mechanisms 31 spaced apart along the height direction of the slitting apparatus 100, the plurality of first conveying mechanisms 31 may receive non-adjacent portions of the plurality of sub-material strips 201 formed by the first slitting device 2 and convey the plurality of sub-material strips to the second conveying mechanism 32 via separate paths. In this way, when the plurality of sub-material strips 201 formed by the first slitting device 2 leave the first slitting device 2, the non-adjacent sub-material strips 201 are conveyed via separate paths, which may avoid interference or entanglement between the sub-material strips.

On the other hand, by adjusting the positions of the plurality of sub-material strips 201 on the first conveying mechanisms 31 using the plurality of first alignment mechanisms 6, when the sub-material strips 201 are conveyed to the second conveying mechanism 32, the sub-material strips 201 are equally spaced along the width direction. In this way, when the second conveying mechanism 32 conveys the plurality of sub-material strips 201 to the second slitting device 4, the positions of the sub-material strips 201 will not be changed, which maintains the state where the coating areas 200a of the plurality of sub-material strips 201 in the same plane are equally spaced, and avoids deviation to lead to a situation in which the pole piece 202 formed by the second slitting device 4 has an inconsistent width, resulting in a higher yield rate of pole pieces.

Wherein, both the first conveying mechanism 31 and the second conveying mechanism 32 may comprise a plurality of rolling rollers.

As shown in FIG. 2, it shows that the pole piece material strip 200 has four coating areas 200a, with the first foil area 200b between two adjacent coating areas 200a. On the side of the first coating zone 200a, from the top to the bottom of the paper, facing away from the first foil zone 200b, there is one second foil zone 200c, and on the side of the fourth coating zone 200a, from the top to the bottom of the paper, facing away from the first foil zone 200b, there is another second foil zone 200c. When the pole piece material strip 200 reaches the first slitting device 2, the first slitting device 2 cuts the first foil area 200b of the pole piece material strip 200 along the dashed line shown in FIG. 2, forming four sub-material strips 201 as shown in FIG. 3. When the four sub-material strips 201 are arranged spaced apart from each other and laid flat and reach the second slitting device 4, the second slitting device 4 cuts the coating area 200a of the sub-material strips 201 along the dashed line shown in FIG. 3 to form pole pieces 202.

Taking the pole piece material strip 200 in FIG. 2 as an example, the aforementioned "each first conveying mechanism 31 is configured for receiving non-adjacent portions 201 of the plurality of sub-material strips 201 formed by the first slitting device 2" means that one first conveying mechanism 31 receives the first and third sub-material strips 201 (which are not adjacent) from top to bottom of the paper. The second conveying mechanism 32 receives the second and fourth sub-material strips 201 (which are not adjacent) from top to bottom of the paper. Since the first sub-material strip 201 and the third sub-material strip 201 are not adjacent, they already have a spacing between them and will not interfere or even tangle with each other when entering a conveying mechanism, while the second sub-material strip 201 and the fourth sub-material strip 201 are not adjacent, and they already have a spacing between them and will not interfere or even tangle with each other when entering another conveying mechanism.

In some other embodiments, the number of coating areas 200a of the pole piece material strip 200 may differ from that shown in FIG. 2. For example, there may be two, three, five, or any other number of coating areas 200a, which will not be specifically limited by the present embodiment.

In some embodiments, as shown in FIG. 1, the slitting apparatus 100 further comprises a second conveying device 7, which is located between the unwinding device 1 and the first slitting device 2 and is configured for receiving the pole piece material strip 200 output by the unwinding device 1 and conveying the pole piece material strip 200 to the first slitting device 2.

Optionally, the second conveying device 7 comprises a driving roller 71 and plurality of transmission rollers 72, the plurality of transmission rollers 72 are provided between the unwinding device 1 and the first slitting device 2, two adjacent transmission rollers 72 are spaced apart, two groups of the two adjacent transmission rollers 72 are provided with the driving roller 71 therebetween, and the driving roller 71 is configured for driving the pole piece material strip 200 along the plurality of transmission rollers 72 from the unwinding device 1 to the first slitting device 2. In this way, the driving roller 71 can provide power to drive the pole piece material strip 200 to move along the plurality of transmission rollers 72, and thus convey the pole piece material strip 200 along the distribution direction of the plurality of transmission rollers 72 from the unwinding device 1 to the first slitting device 2, which enables that the conveying process is relatively stable and the pole piece material strip 200 will not experience misalignment, thereby facilitating improvement of slitting precision.

Exemplary, the second conveying device 7 further comprises a tension balancing roller 73, which is provided between two groups of the two adjacent transmission rollers 72 and is configured for regulating tension of the pole piece material strip 200. In this way, according to the requirement on the tension of the pole piece material strip 200 when the first slitting device 2 cuts the foil area of the pole piece material strip 200, the tension of the pole piece material strip 200 may be adjusted by the tension balancing roller 73, so that the tension of the pole piece material strip 200 matches the slitting requirement of the first slitting device 2, thereby resulting in higher precision and effect of slitting.

Optionally, the slitting equipment further comprises a tension isolating mechanism 8, which is provided on the first conveying device 3 and is configured for isolating tension of the sub-material strips 201 located between the first slitting device 2 and the second slitting device 4. In this way, by isolating the tension of the sub-material strips 201 with tension isolating mechanism 8, the tension requirements of the first slitting device 2 for the pole piece material strip 200 and the tension requirements of the second slitting device 4 for the sub-material strips 201 may be met separately without interfering with each other, thereby improving the precision and effect of slitting.

In some embodiments, the slitting equipment 100 further comprises a plurality of material-strip pressing mechanisms 9, one of which is provided between each winding device 5 and the second slitting device 4, and each material-strip pressing mechanism 9 is configured for applying pressure to each pole piece to tighten the pole piece 202. In this way, when the pole piece 202 has no tension, the material-strip pressing mechanisms 9 may apply pressure to the pole piece 202 to tighten it and make it have tension, thereby facilitating winding of the pole piece 202 by the winding device 5.

Exemplary, the slitting equipment 100 further comprises a second alignment mechanism 10, which is provided between the unwinding device 1 and the first slitting device 2 and is configured for adjusting, in a width direction of the pole piece material strip 200, a position of the pole piece material strip 200 entering the first slitting device 2. In this way, by adjusting the position of the pole piece material strip 200 in the width direction using the second alignment mechanism 10 such that when the pole piece material strip 200 enters the first slitting device 2, the first slitting device 2 may accurately slit the foil area of the pole piece material strip 200, resulting in higher slitting precision and a higher yield rate.

In some embodiments, the slitting equipment 100 further comprises a plurality of third conveying devices 11, which are provided respectively on the plurality of winding device 5 and the second slitting device 4 one by one, and which convey the plurality of pole pieces 202 from the second slitting device 4 to the plurality of winding device 5 respectively.

Exemplary, the slitting equipment 100 further comprises a plurality of width measuring devices 12, which are respectively provided on the plurality of third conveying devices 11 one by one, and each width measuring device 12 is configured for measuring width of the pole piece 202 conveyed by a corresponding third conveying device 11. In this way, by measuring the width of the pole piece 202 using the width measuring mechanisms 12, it is possible to determine whether the width of the pole piece 202 meets the processing requirements, such that after the pole piece 202 is wound by the winding device 5, the wound pole piece material belt 200 is classified, which enables that the pole pieces 202 that meet the processing requirements are shipped out or conveyed to the next workstation for further processing while those that do not meet the requirements are reworked or utilized as scrap material.

In some embodiments, the slitting equipment 100 further comprises a plurality of dust-removing devices 13, which are respectively provided on the plurality of third conveying devices 11 one by one, and each dust-removing device is configured for removing dust from the pole piece 202 conveyed by a corresponding third conveying device 11. In this way, by removing dust from the pole pieces 202, it is possible to ensure the cleanness of the pole piece 202 and avoid the quality problem caused by the contaminated pole piece 202 leaving the factory after being wound by the winding device 5.

Optionally, each dust-removing device 13 comprises one or more of a brush dust-removing mechanism 13, an ultrasonic dust-removing mechanism 13, and an air knife dust-removing mechanism 13. In this way, this embodiment provides several different types of dust removal devices 13, which may be selected according to actual needs to meet different usage requirements.

In some embodiments, the slitting equipment 100 further comprises a plurality of static-eliminating mechanisms (not shown), which are respectively provided on the plurality of third conveying devices 11 one by one, and each static-eliminating mechanism is configured for eliminating static from the pole piece 202 conveyed by a corresponding third conveying device 11. In this way, by eliminating static from the pole pieces 202 using the static-eliminating mechanisms, it is possible to prevent the pole piece 202 from being contaminated by dust and fine particles due to the static, thereby improving the yield rate of the pole piece 202.

Optionally, the slitting apparatus 100 further comprises a color mark sensor 14 and a marking module (not shown). The color mark sensor 14 is provided on the second conveying device 7 and is configured for detecting the tape and uncoated areas of the pole piece material strip 200. The marking module is provided on the third conveying device 11 and is configured for marking the pole pieces 202. For example, the marking module may be a laser marking machine or a labeller, etc., which is not specifically limited in the present embodiment.

The embodiments of the present disclosure provide a slitting apparatus 100. The unwinding device 1 outputs the pole piece material strip 200 to the first slitting device 2, the first slitting device 2 receives the pole piece material strip 200 and cuts the foil area to form the plurality of sub-material strips 201, and the first conveying device 3 receives the plurality of sub-material strips 201 and after arranging them spaced apart from each other and laid flat, outputs them to the second slitting device 4. In this way, the second slitting device 4 can simultaneously slit the coating areas 200a of the plurality of sub-material strips 201 to form the plurality of pole pieces 202, without the need to provide a plurality of second slitting devices 4 to slit the coating areas 200a of the plurality of sub-material strips 201 respectively. This results in fewer slitting tools, lower equipment cost, a smaller equipment, and a smaller footprint. Moreover, with the plurality of sub-material strips 201 spaced and laid flat, it is possible to avoid interference or even entanglement between the sub-material strips. At the same time, the plurality of winding devices 5 are used to wind the plurality of pole pieces 202, thereby packaging the pole pieces 202.

The above detailed introduction to the slitting device of the embodiments disclosed in the present disclosure has been provided. The above embodiments are merely illustrative of the principles and implementation methods of the present disclosure. For those skilled in the art, various changes and modifications can be made based on the above description. Therefore, all such changes and modifications should be comprised within the scope of the present disclosure as defined by the claims.

## Claims

1. A slitting apparatus, **characterized by** comprising:
an unwinding device configured for outputting a pole piece material strip;
a first slitting device configured for receiving the pole piece material strip output by the unwinding device and slitting a foil area of the pole piece material strip to form a plurality of sub-material strips;
a first conveying device configured for receiving the plurality of sub-material strips and outputting them after arranging them spaced apart from each other and laid flat;
a second slitting device configured for receiving the plurality of sub-material strips which are arranged spaced apart from each other and laid flat, and slitting coating areas of the sub-material strips to form a plurality of pole pieces; and
a plurality of winding devices configured for winding the plurality of pole pieces.

2. The slitting apparatus of claim 1, **characterized in that** the first conveying device comprises a plurality of first conveying mechanisms, a second conveying mechanism, and a plurality of first alignment mechanisms, and the plurality of first conveying mechanisms are located between the first slitting device and the second conveying mechanism, and are arranged spaced apart along a height direction of the slitting apparatus;
all of the plurality of first conveying mechanisms are configured for receiving non-adjacent portions of the plurality of sub-material strips formed by the first slitting device, and conveying the plurality of sub-material strips to the second conveying mechanism via separate paths;
the second conveying mechanism is located between the first conveying mechanisms and the second slitting device, and is configured for receiving the plurality of sub-material strips which are arranged spaced apart from each other and laid flat and conveying them to the second slitting device;
the plurality of first alignment mechanisms are respectively provided on the plurality of first conveying mechanisms one by one, and are configured for adjusting positions of the plurality of sub-material strips on the first conveying mechanisms so that when the plurality of sub-material strips are conveyed to the second conveying mechanism, the plurality of sub-material strips are equally spaced along a width direction of the sub-material strips.

3. The slitting apparatus of claim 1 or 2, **characterized in that** the slitting apparatus further comprises a second conveying device, which is located between the unwinding device and the first slitting device and is configured for receiving the pole piece material strip output by the unwinding device and conveying the pole piece material strip to the first slitting device.

4. The slitting apparatus of claim 3, **characterized in that** the second conveying device comprises a driving roller and a plurality of transmission rollers, the plurality of transmission rollers are provided between the unwinding device and the first slitting device, with two adjacent transmission rollers being spaced apart, wherein two groups of the two adjacent transmission rollers are provided with the driving roller therebetween, and the driving roller is configured for driving the pole piece material strip along the plurality of transmission rollers from the unwinding device to the first slitting device.

5. The slitting apparatus of claim 4, **characterized in that** the second conveying device further comprises a tension balancing roller, which is provided between two groups of the two adjacent transmission rollers and is configured for regulating tension of the pole piece material strip.

6. The slitting apparatus of any one of claims 1 to 5, **characterized in that** the slitting apparatus further comprises a tension isolating mechanism, which is provided on the first conveying device and is configured for isolating tension of the sub-material strips located between the first slitting device and the second slitting device.

7. The slitting apparatus of any one of claims 1 to 6, **characterized in that** the slitting apparatus further comprises a plurality of material-strip pressing mechanisms, one of which is provided between each winding device and the second slitting device, and each material-strip pressing mechanism is configured for applying pressure to each pole piece to tighten the pole piece.

8. The slitting apparatus of any one of claims 1 to 7, **characterized in that** the slitting apparatus further comprises a second alignment mechanism, which is provided between the unwinding device and the first slitting device and is configured for adjusting, in a width direction of the pole piece material strip, a position of the pole piece material strip entering the first slitting device.

9. The slitting apparatus of any one of claims 1 to 8, **characterized in that** the slitting apparatus further comprises a plurality of third conveying devices, each of which is provided between each winding device and the second slitting device, and the plurality of third conveying devices are configured for conveying the plurality of pole pieces from the second slitting device to the plurality of winding devices.

10. The slitting apparatus of claim 9, **characterized in that** the slitting apparatus further comprises a plurality of width measuring mechanisms, which are respectively provided on the plurality of third conveying devices one by one, and each width measuring mechanism is configured for measuring width of the pole piece conveyed by a corresponding third conveying device.

11. The slitting apparatus of claim 9 or 10, **characterized in that** the slitting apparatus further comprises a plurality of dust removing mechanisms, which are respectively provided on the plurality of third conveying devices one by one, and each dust removing mechanism is configured for removing dust from the pole piece conveyed by a corresponding third conveying device.

12. The slitting apparatus of claim 11, **characterized in that** each dust removing mechanism comprises one or more of a brush dust-removing mechanism, an ultrasonic dust-removing mechanism, and an air knife dust removing mechanism.

13. The slitting apparatus of any one of claims 9 to 12, **characterized in that** the slitting apparatus further comprises a plurality of static-eliminating mechanisms, which are respectively provided on the plurality of third conveying devices one by one, and each static-eliminating mechanism is configured for eliminating static from the pole piece conveyed by a corresponding third conveying device.
